# EUROPEAN PATENT APPLICATION

(11) **EP 4 497 766 A1**
(43) Date of publication of application: **29.01.2025**
(21) Application number: 23188059.2
(22) Date of filing: 27.07.2023
(51) Int. Cl.: C08G 18/08, C08G 18/12, C08G 18/32, C08G 18/40, C08G 18/42, C08G 18/48, C08G 18/66, C08G 18/72, C09D 11/00, C09D 175/04, C09J 175/04, C09J 175/06, C09J 175/08

(54) **AQUEOUS POLYURETHANE-POLYUREA DISPERSION**

(71) Applicant: Covestro Deutschland AG, 51373 Leverkusen (DE)
(72) Inventor: ZHOU, Shijie, Shanghai, 201206 (CN); DENG, Rui, Shanghai, 201206 (CN); WEI, Songli, Shanghai, 200129 (CN); LIU, Jiapei, Shanghai, 201206 (CN); XU, Shunping, Shanghai, 201317 (CN); SHENG, Hongyun, Shanghai, 201206 (CN)
(74) Representative: Levpat

(57) **Abstract**

The present invention relates to an aqueous polyurethane-polyurea dispersion comprising polyurethane-polyurea, and a preparation method and use thereof, especially in the field of coatings, adhesives or inks, and an object or article obtained by coating, bonding, sealing or printing with the aqueous polyurethane-polyurea dispersion. The polyurethane-polyurea of the aqueous polyurethane-polyurea dispersion comprising polyurethane-polyurea is obtained by the reaction of a system comprising two polyisocyanates; a polymer; a polyol; a silane compound and a hydrophilic compound comprising 2 to 3 isocyanate-reactive groups. The aqueous polyurethane-polyurea dispersion of the present invention has good adhesion and hydrolysis resistance.

## Description

### Technical Field

The present invention relates to an aqueous polyurethane-polyurea dispersion, and a preparation method and use thereof, especially in the field of coatings, adhesives or inks, and an object or article obtained by coating, bonding, sealing or printing with the aqueous polyurethane-polyurea dispersion.

### Prior Art

Aqueous polyurethane-polyurea dispersions may be widely used in coatings, adhesives, sealants and printing inks. Compared with traditional solvent-based polyurethanes, they have the advantages of environmental protection performance, non-flammable and non-explosive property, safe storage and high solid content. However, compared with solvent-based polyurethanes, aqueous polyurethane-polyurea dispersions contain hydrolysable groups, which are easily hydrolyzed when stored under ambient conditions. In the meanwhile, metal ions (such as those introduced in catalysts) present in the system may also promote the hydrolysis of the hydrolysable groups in the aqueous polyurethane-polyurea dispersions, which will reduce their application performance. Specifically, it may affect their adhesion, stain resistance, scratch resistance, impact resistance, elongation at break and washing resistance in the field of coating products, and affect the paintability, heat resistance and hydrolysis resistance of sealant and adhesive products in the field of sealant and adhesive products.

It was proposed in patents such as DE 19954500, DE 4410557 or EP 792908 to introduce carboxylate into the polyurethane-polyurea dispersions, and then compound it with carbodiimide to improve the adhesion, wherein the carboxylate is obtained by adding dimethylolpropionic acid to the polyurethane-polyurea. The reactivity of the carboxyl groups with the carbodiimide in the above reaction is low.

US5066705 describes the preparation of weather-resistant aqueous paints for plastic substrates by using a carboxyl-containing polymer, a carboxyl-containing polyurethane and a polycarbodiimide. CN 108250390 B describes that self-crosslinkable aqueous polyurethane dispersions are obtained by adding a non-sterically hindered bifunctional silane and introducing terminal polyethoxy segments as hydrophilic agent.

CN 109081897 A describes that self-crosslinkable aqueous polyurethane dispersions are obtained by adding a non-sterically hindered bifunctional, a monofunctional silane and introducing terminal polyethoxy segments as hydrophilic agent.

EP 3026071 A1 describes a process for preparing an aqueous polyurethane dispersion which is obtained from a mixture comprising at least one readily crystallizable polyester polyol and at least one polyether polyol, wherein the polyether polyol is a polyalkylene glycol homopolymer or copolymer containing ethylene oxide units.

WO 2016135162 A1 describes a method for preparing an aqueous peptide-functionalized polyurethane dispersion (PUD) that may be used as adhesives, especially for metal surfaces, which is prepared by reacting a maleimide-terminated polyurethane prepolymer with one or more peptides. By the coupling reaction of the amino acid side chain in the peptide and the maleimide group, the adsorption quality of peptides on the substrate surface is enhanced by means of the adsorption property thereof. The reaction mixture comprises at least a polyether polyol and a polyester polyol, wherein the polyether polyol may be a polyalkylene glycol homopolymer or copolymer, and the polyester polyol may be a crystalline/semi-crystalline polyol.

US 10640702 B describes a method for preparing coated particles and their use as a proppant in hydraulic fracturing to optimize capital and equipment costs and improve production efficiency. The coated particles consist of matrix particles with a particle size not more than 3 mesh and a coating layer comprising a crystalline or semi-crystalline polyester/polyurethane having a decrystallization temperature of at least 35°C and modified with aminosilane. The crystalline or semi-crystalline polyester/polyurethane may contain a monofunctional or difunctional polyether polyol obtained by the polymerization of ethylene oxide or the copolymerization of ethylene oxide and propylene oxide.

### Summary of the invention

The object of the present invention is to provide an aqueous polyurethane-polyurea dispersion, and a preparation method and use thereof, especially in the field of coatings, adhesives or inks, and an object or article obtained by coating, bonding, sealing or printing with the aqueous polyurethane-polyurea dispersion.

In the aqueous polyurethane-polyurea dispersion comprising polyurethane-polyurea according to the present invention, the polyurethane-polyurea is obtained by the reaction of a system comprising the following components:
a. at least one aliphatic polyisocyanate and at least one cycloaliphatic polyisocyanate with a weight ratio of the at least one aliphatic polyisocyanate to the at least one cycloaliphatic polyisocyanate in the range of 10: 1 to 20: 1, preferably one aliphatic polyisocyanate and one cycloaliphatic polyisocyanate with a weight ratio of the one aliphatic polyisocyanate to the one cycloaliphatic polyisocyanate in the range of 10: 1 to 20: 1;
b. a polymer having a structure of formula I: 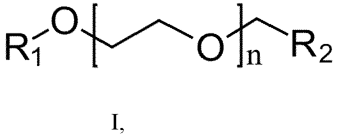 wherein n is 10 to 75, R₁ is an alkyl group containing 1 to 10 carbon atoms, and R₂ is a moiety containing at least two isocyanate-reactive groups;
c. a polyol other than component b), which has a hydroxyl functionality of 1.5 to 4;
d. a silane compound comprising one isocyanate-reactive group and at least two methoxy and/or ethoxy groups attached to the silicon atom;
e. a hydrophilic compound, different than polymer b, comprising 2 to 3 isocyanate-reactive groups, wherein the hydrophilic group of the hydrophilic compound comprises one or more of ionic groups, potentially ionic groups, and non-ionic groups; and
   optionally
f. a compound comprising 1 to 3 amino and/or hydroxyl groups, preferably 1 to 3 amino groups.

According to one aspect of the present invention, provided is a method for preparing the aqueous polyurethane-polyurea dispersion comprising polyurethane-polyurea according to the present invention, comprising the following steps:
i. reacting some or all of component a) at least one aliphatic polyisocyanate and at least one cycloaliphatic polyisocyanate with a weight ratio of the at least one aliphatic polyisocyanate to the at least one cycloaliphatic polyisocyanate in the range of 10: 1 to 20: 1, preferably one aliphatic polyisocyanate and one cycloaliphatic polyisocyanate with a weight ratio of the one aliphatic polyisocyanate to the one cycloaliphatic polyisocyanate in the range of 10: 1 to 20: 1, component b) a polymer having a structure of formula I and component c) a polyol other than component b) to obtain a prepolymer;
ii. reacting the prepolymer, component d) a silane compound, component e) a hydrophilic compound, different than polymer b), comprising 2 to 3 isocyanate-reactive groups, and optionally component f) a compound comprising 1 to 3 amino and /or hydroxyl groups, preferably 1 to 3 amino groups to obtain the polyurethane-polyurea; and
iii. introducing water before, during or after step ii to obtain the aqueous polyurethane-polyurea dispersion.

According to another aspect of the present invention, provided is a coating, an adhesive or an ink comprising the aqueous polyurethane-polyurea dispersion comprising polyurethane-polyurea according to the present invention.

According to yet another aspect of the present invention, provided is the use of the aqueous polyurethane-polyurea dispersion comprising polyurethane-polyurea according to the present invention for preparing coated products, bonded products or printed products.

According to still another aspect of the present invention, provided is an object or article comprising a substrate prepared, coated, bonded, sealed, or printed with the aqueous polyurethane-polyurea dispersion comprising polyurethane-polyurea according to the present invention.

According to yet another aspect of the present invention, provided is a printing method comprising applying the aqueous polyurethane-polyurea dispersion comprising polyurethane-polyurea according to the present invention onto the surface of a substrate, and then curing.

According to yet another aspect of the present invention, provided is a printed product which comprises a substrate and a coating layer formed by applying the aqueous polyurethane-polyurea dispersion comprising polyurethane-polyurea according to the present invention onto the substrate.

The aqueous polyurethane-polyurea dispersion of the present invention has good adhesion and hydrolysis resistance, and is suitable for use in coatings, adhesives or inks, in particularly in binders, especially in shoes glues.

### Embodiments

The present invention provides an aqueous polyurethane-polyurea dispersion comprising polyurethane-polyurea, which is obtained by the reaction of a system comprising the following components:
a. at least one aliphatic polyisocyanate and at least one cycloaliphatic polyisocyanate with a weight ratio of the at least one aliphatic polyisocyanate to the at least one cycloaliphatic polyisocyanate in the range of 10: 1 to 20: 1, preferably one aliphatic polyisocyanate and one cycloaliphatic polyisocyanate with a weight ratio of the one aliphatic polyisocyanate to the one cycloaliphatic polyisocyanate in the range of 10: 1 to 20: 1;
b. a polymer having a structure of formula I: 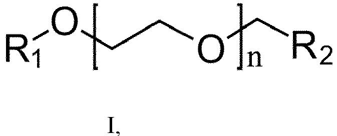 wherein n is 10 to 75, R₁ is an alkyl group containing 1 to 10 carbon atoms, and R₂ is a moiety containing at least two isocyanate-reactive groups;
c. a polyol other than component b), which has a hydroxyl functionality of 1.5 to 4;
d. a silane compound comprising one isocyanate-reactive group and at least two methoxy and/or ethoxy groups attached to the silicon atom;
e. a hydrophilic compound, different than polymer b, comprising 2 to 3 isocyanate-reactive groups, wherein the hydrophilic group of the hydrophilic compound comprises one or more of ionic groups, potentially ionic groups, and non-ionic groups; and
   optionally
f. a compound comprising 1 to 3 amino and/or hydroxyl groups, preferably 1 to 3 amino groups.

The present invention further provides a preparation method of the aqueous polyurethane-polyurea dispersion, and use thereof, especially in the field of coatings, adhesives or inks, and an object or article obtained by coating, bonding, sealing or printing with the aqueous polyurethane-polyurea dispersion.

The term "curing" used herein refers to a process of a liquid material from the liquid state to the cured state .

The term "coating" used herein refers to a material that can be applied onto the surface of an object by a variety of processes to form a continuous solid coating layer with firm adhesion and certain strength.

The term "adhesive" used herein refers to a chemical material that can be applied onto the surface of an object by a variety of processes, form a coating layer on an object itself or on the surface of one object and of another object, and bond the object itself or the surface of one object to that of another object, which is also used as a synonym for adhesion agent and/or sealant and/or binder.

The term "polyurethane-polyurea" used herein refers to polyurethane and/or polyurethaneurea and/or polyurea.

The term "aqueous polyurethane-polyurea dispersion" as used herein refers to an aqueous polyurethane dispersion and/or an aqueous polyurethaneurea dispersion and/or an aqueous polyurea dispersion.

The content of polyurethane-polyurea in the aqueous polyurethane-polyurea dispersion described herein is equivalent to that of the solid constituents in the aqueous polyurethane-polyurea dispersion.

The term "solid constituents" as used herein refers to solid content or active constituents.

The term "isocyanate-reactive compound" used herein refers to a component containing a group reactive toward isocyanate group, i.e. a component containing a group having Zerewitinoff-active hydrogen, wherein the definition of Zerewitinoff-active hydrogen refers to Römpp's Chemical Dictionary (Römpp Chemie Lexikon), 10th edition, Georg Thieme Verlag Stuttgart, 1996. In general, the group having Zerewitinoff-active hydrogen is understood in the art to mean hydroxyl group (OH), amino group (NHₓ) and thiol group (SH).

The term "isocyanate-reactive group" used herein refers to a group reactive toward isocyanate group, i.e. a group having Zerewitinoff-active hydrogen, wherein the definition of Zerewitinoff-active hydrogen refers to Römpp's Chemical Dictionary (Römpp Chemie Lexikon), 10th edition, Georg Thieme Verlag Stuttgart, 1996. In general, the group having Zerewitinoff-active hydrogen is understood in the art to mean hydroxyl group (OH), amino group (NHₓ) and thiol group (SH).

### Aqueous polyurethane-polyurea dispersion

The amount of the organic solvent in the aqueous polyurethane-polyurea dispersion is preferably less than 1% by weight, relative to the total weight of the aqueous polyurethane-polyurea dispersion.

The content of solid constituents of the aqueous polyurethane-polyurea dispersion is preferably 15% by weight to 70% by weight, most preferably 30% by weight to 60% by weight, relative to the total weight of the aqueous polyurethane-polyurea dispersion, which is measured using the HS153 moisture analyzer from Mettler Toledo Company according to DIN-EN ISO 3251:2019, in which the heating temperature is 120°C, and the test end point is determined when the weight loss of the sample is less than 1 mg/140 seconds.

The pH value of the aqueous polyurethane-polyurea dispersion is in the range of 4 to 11, preferably in the range of 5 to 9, most preferably in the range of 6.0 to 7.5 which is measured at 23°C with a PB-10 pH meter from Sartorius, Germany, according to DIN ISO 976:2016-12.

The average particle size of the aqueous polyurethane-polyurea dispersion is preferably of 20nm to 750nm, more preferably 50nm to 450nm, most preferably 100nm to 250nm, which is determined by laser correlation (laser particle sizer) with a ZEN 1600 tester from Malvern, UK, according to ISO 13321:1996 test method, in which 1 drop (about 0.05 g) of the sample is added to 50 ml of ultrapure water, and the diluted sample is tested at 23.0±0.1°C, material: polystyrene latex (RI: 1.590; absorption rate: 0.010), dispersant: water (temperature: 23.0°C; viscosity: 0.9308 cP; RI: 0.330), equilibration time: 60 seconds, using a disposable cuvette DTS0012, positioning method: automatic attenuation selection, best position found: yes, analysis model: universal (normal resolution), measurement angle: 173° backscatter (NIBS default), runs: 3, run duration: 10 seconds, measurements: 10.

The viscosity of the aqueous polyurethane-polyurea dispersion is preferably in the range of 30 mPa s to 6000 mPa s, more preferably in the range of 1000 mPa·s to 3500 mPa·s, which is measured according to ISO 2555:2018 at 23°C using a DV-II+Pro. rotational viscometer from Brookfield, rotor type: s 62-64, speed: 30 RPM, test temperature: 23°C.

### Component a) Polyisocyanate

The isocyanate functionality of the polyisocyanate is preferably not less than 2, more preferably 2 to 4, and most preferably 2.

Component a) the at least one aliphatic polyisocyanate and at least one cycloaliphatic polyisocyanate with a weight ratio of the at least one aliphatic polyisocyanate to the at least one cycloaliphatic polyisocyanate in the range of 10:1 to 20:1, preferably one aliphatic polyisocyanate and one cycloaliphatic polyisocyanate with a weight ratio of the one aliphatic polyisocyanate to the one cycloaliphatic polyisocyanate in the range of 10:1 to 20:1 are preferably a mixture of hexamethylene diisocyanate and isophorone diisocyanate.

The weight ratio of the aliphatic polyisocyanate to the cycloaliphatic polyisocyanate is preferably of 10:1 to 20:1.

The aliphatic polyisocyanate is preferably one or more of hexamethylene diisocyanate, 1,5-pentamethylene diisocyanate, 2,2-dimethylpentamethylene diisocyanate, 2,2,4-trimethylhexamethylene diisocyanate, butene diisocyanate, 1,3-butadiene-1,4-diisocyanate, 2,4,4-trimethyl 1,6-hexamethylene diisocyanate, 1,6,11-undecane triisocyanate, 1,3,6-hexamethylene triisocyanate, 1,8-diisocyanato-4-isocyanatatomethyl octane, bis(isocyanatoethyl) carbonate, bis(isocyanatatoethyl)ether, lysine methyl ester diisocyanate, lysine triisocyanate, bis(isocyanatatomethyl) sulfide, bis(isocyanatatoethyl) sulfide, bis(isocyanatopropyl) sulfide, bis(isocyanatohexyl) sulfide, bis(isocyanatomethyl)sulfone, bis(isocyanatomethyl)disulfide, bis(isocyanatoethyl)disulfide, bis(isocyanatopropyl)disulfide, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-thiolane, 1,2,3-tris(isocyanatomethylthio)propane, 1,2,3-tris(isocyanatoethylthio) propane, 3,5-dithia-1,2,6,7-heptane tetraisocyanate, 2,6-diisocyanatomethyl-3,5-dithia-1,7-heptane diisocyanate, 2,5-diisocyanatomethylthiophene and isocyanatoethylthio-2,6-dithia-1,8-octane diisocyanate; most preferably hexamethylene diisocyanate.

The cycloaliphatic polyisocyanate is preferably one or more of 2,5-bis(isocyanatomethyl)-bicyclo[22.1]heptane, 2,6-bis(isocyanatomethyl) -bicyclo[2.2.1]heptane, bis(isocyanatomethyl)cyclohexane, isophorone diisocyanate, 4,4-dicyclohexylmethane diisocyanate, 2,5-diisocyanato-1,4-dithiane, 2,5-diisocyanatomethyl-1,4-dithiane, 4,5-diisocyanato-1,3-dithiolane, 4,5-bis(isocyanatomethyl)-1,3-dithiolane, 4,5-diisocyanatomethyl-2-methyl-1,3-dithiolane, norbornane diisocyanate (NBDI), hydrogenated xylylene diisocyanate (H₆XDI) and 1,4-cyclohexyl diisocyanate (H₆PPDI), most preferably isophorone diisocyanate.

The aliphatic polyisocyanate and the cycloaliphatic polyisocyanate are most preferably hexamethylene diisocyanate and isophorone diisocyanate.

The weight ratio of the hexamethylene diisocyanate to isophorone diisocyanate is preferably 10:1 to 20:1.

Component a) is preferably in an amount of 9% by weight to 18% by weight, most preferably 10% by weight to 12% by weight, relative to the total weight of solid constituents of the aqueous polyurethane-polyurea dispersion.

### Component b) Polymer having a structure of formula I

In formula I, n is 10 to 75, and may or may not be an integer, preferably 10 to 40, more preferably 10 to 30.

The at least two isocyanate-reactive groups are selected from at least two amino groups, at least two hydroxyl groups, or at least one amino group and at least one hydroxyl group.

Where component b) a polymer having a structure of formula I comprises three or more isocyanate-reactive groups, the isocyanate-reactive groups may be two amino groups and one or more amino groups or other isocyanate-reactive groups, or may be two hydroxyl groups and one or more hydroxyl groups or other isocyanate-reactive groups, or may also be one amino group, one hydroxyl group and one or more amino groups, hydroxyl groups or other isocyanate-reactive groups.

The polymer having a structure of formula I is most preferably one or more of a polymer having a structure of formula II and a polymer having a structure of formula III, 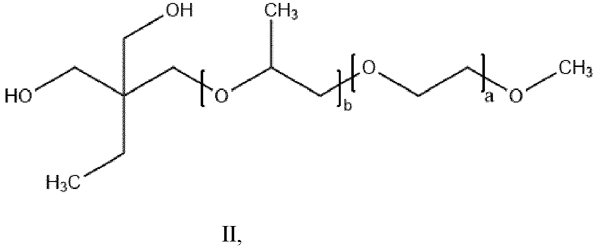 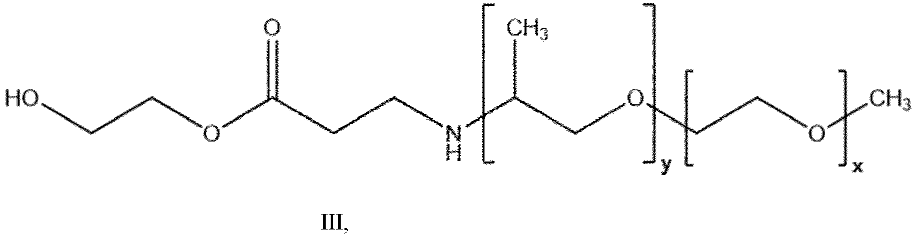 wherein a is 10 to 75 and may or may not be an integer, b is 0 to 50 and may or may not be an integer in formula II; x is 10 to 75 and may or may not be an integer, y is 1 to 50 and may or may not be an integer in formula III.

The component b) the polymer having a structure of formula I has a number-average molecular weight of preferably 500 g/mol to 4000 g/mol, most preferably 600 g/mol to 1500 g/mol, which is measured by gel permeation chromatography, wherein tetrahydrofuran is used as the mobile phase, and the molecular weight is calculated based on a polystyrene as the standard, which is selected with a molecular weight of 200 or higher, and measured with a differential refraction detector (RI detector).

Component b) the polymer having a structure of formula I has preferably a functionality of 2.

Component b) the polymer having a structure of formula I is preferably in an amount of 0.9% by weight to 4% by weight, most preferably 1% by weight to 2% by weight, relative to the total weight of solid constituents of the aqueous polyurethane-polyurea dispersion.

### Component c) Polyol other than component b)

The polyol other than component b) is preferably one or more of diols with a number-average molecular weight of 62 to 15000 and polyols with a number-average molecular weight of 62 to 15000, more preferably one or more of diols with a number-average molecular weight of 62 to 5000 and triols with a number-average molecular weight of 92 to 5000, most preferably one or more of polyester polyols containing 2 to 3 hydroxyl groups with a number-average molecular weight of 500 to 2500, polycarbonate polyols containing 2 to 3 hydroxyl groups with a number-average molecular weight of 400 to 2500, polyether polyols containing 2 to 3 hydroxyl groups with a number-average molecular weights of 200 to 2500, polylactone polyols containing 2 to 3 hydroxyl groups with a number-average molecular weights of 250 to 2500 and low-molecular-weight alcohols, wherein the number-average molecular weight is measured by gel permeation chromatography, wherein tetrahydrofuran is used as the mobile phase, and the molecular weight is calculated based on a polystyrene as the standard, which is selected with a molecular weight of 200 or higher, and measured with a differential refraction detector (RI detector).

The polyether polyol containing 2 to 3 hydroxyl groups with a number-average molecular weight of 200 to 2500 is preferably a polytetrahydrofuran polyol containing 2 to 3 hydroxyl groups with a number-average molecular weight of 200 to 2500.

The polyol other than component b) has the enthalpy of fusion of preferably not less than 15 J/g, most preferably 25 J/g to 100 J/g, obtained by DSC from the first heating curve from 20°C to 100°C according to DIN 65467, method A, wherein the loading volume is 10-20 mg, and the heating rate is 20 K/min.

Component c) is preferably in an amount of 5% by weight to 94% by weight, most preferably 70% by weight to 90% by weight, relative to the total weight of solid constituents of the aqueous polyurethane-polyurea dispersion.

### Component d) Silane compound

The silane compound comprises one isocyanate-reactive group and at least two methoxy groups attached to the silicon atom; or the silane comprises one isocyanate-reactive group and at least two ethoxy groups attached to the silicon atom; or the silane comprises one isocyanate-reactive group and at least one methoxy group attached to the silicon atom and one ethoxy group attached to the silicon atom.

The silane compound most preferably comprises only one isocyanate-reactive group and at least two methoxy and/or ethoxy groups attached to the silicon atom.

Component d) the silane compound is preferably one or more of bis(3-triethoxysilylpropyl)amine, bis(3-trimethoxysilylpropyl)amine, (3-aminopropyl)trimethoxysilane, (3-aminopropyl)triethoxysilane, 3-aminopropyl(diethoxy)methylsilane and 3-aminopropylmethyldimethoxysilane, most preferably one or more of (3-aminopropyl)trimethoxysilane, (3-aminopropyl)triethoxysilane, and 3-aminopropylmethyldimethoxysilane.

Additionally, respective aspartic esters which can be synthesized from the above mentioned aminofunctional silanes and esters of unsaturated dicarboxylic acids like maleic acid can be used (formula IV). 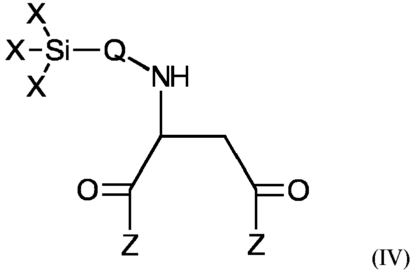 with X being same or different methoxy-, ethoxy- methyl- or ethyl- with the proviso that at least two groups are methoxy- and or ethoxy-; with Q being alkyl group, preferably n-propyl- and Z being alkoxy-groups, preferably methoxy- or ethoxy-.

Further preferred compounds are N-(3-triethoxy¬silyl¬propyl)aspartic diethyl ester, N-(3-trimethoxysilylpro¬pyl)-aspartic diethyl ester and N-(3-dimethoxymethylsilylpropyl)-aspartic diethylester.

Component d) the silane compound is preferably in an amount of 0.12% by weight to 0.7% by weight, most preferably 0.18% by weight to 0.4% by weight, relative to the total weight of solid constituents of the aqueous polyurethane-polyurea dispersion.

### Component e) Hydrophilic compound comprising 2 to 3 isocyanate-reactive groups

The hydrophilic group of the hydrophilic compound preferably comprises one or more of ionic groups, potentially ionic groups, and non-ionic groups.

Component e) the hydrophilic compound comprising 2 to 3 isocyanate-reactive groups is preferably one or more of N-(2-aminoethyl)-2-aminoethanesulfonates, dimethylolpropionates and N-(2-aminoethyl)-2-aminoethanecarboxylates.

Component e) is preferably in an amount of 0.2% by weight to 50% by weight, most preferably 1% by weight to 5% by weight, relative to the total weight of solid constituents of the aqueous polyurethane-polyurea dispersion.

Component f) Compound comprising 1 to 3 amino and/or hydroxyl groups, preferably 1 to 3 amino groups.

Component f) the compound comprising 1 to 3 amino and/or hydroxy groups preferably comprises at least one amino group; is further preferably one or more aliphatic monoamines, cycloaliphatic monoamines, aliphatic primary and/or secondary diamines, aliphatic primary and/or secondary triamines, aliphatic primary and/or secondary amino alcohols, cycloaliphatic primary and/or secondary diamines, cycloaliphatic primary and/or secondary triamines, cycloaliphatic primary and/or secondary amino alcohols; most preferably one or more of isophoronediamine, N-(2-hydroxyethyl)ethylenediamine and diethanolamine.

Component f) is preferably in an amount not more than 10% by weight, most preferably 0.5% by weight to 3% by weight, relative to the total weight of solid constituents of the aqueous polyurethane-polyurea dispersion.

### Method for preparing the aqueous polyurethane-polyurea dispersion comprising polyurethane-polyurea

The preparation method may further comprise a step iv.: introducing an organic solvent, which is miscible with water but inert to isocyanate groups, during or after step i, and removing the organic solvent from the aqueous polyurethane-polyurea dispersion.

The organic solvent is preferably a solvent that is miscible with water but inert to isocyanate groups, and is further preferably one or more of acetone, butanone, propylene glycol dimethyl ether, other ethers without hydroxyl functional group and esters without hydroxyl functional group; most preferably one or more of acetone and butanone.

The organic solvent preferably does not comprise N-methyl or N-ethyl pyrrolidone compounds.

The organic solvent is preferably partially or completely removed by distillation, wherein the distillation temperature is of 10°C to 100°C, and the distillation time is of 1 hour to 12 hours.

The distillation temperature is most preferably of 25°C to 60°C

The distillation time is most preferably of 2 hours to 7hours.

The rectification pressure is preferably of 500 mbar to 50 mbar, most preferably 200 mbar to 60 mbar.

The amount of the organic solvent remaining in the aqueous polyurethane-polyurea dispersion is preferably less than 1.0% by weight, relative to the total weight of the aqueous polyurethane-polyurea dispersion.

In order to accelerate the reaction of step i, a catalyst commonly used in the preparation of prepolymers may be used, such as triethylamine, 1,4-diazabicyclo-[2,2,2]-octane, bismuth sebacate or neodecanoate, tin dioctanoate, tin(II) chloride or dibutyl tin dilaurate, most preferably tin(II) chloride and bismuth neodecanoate.

The catalyst may be placed in the reactor simultaneously with the components of step i, or added later.

The conversion degree of the components of step i can be obtained by testing the NCO content in the components. To this end, spectroscopic measurements, such as infrared or near-infrared spectroscopy, as well as refractive index determination or chemical analysis, such as titration, may be performed on the extracted samples at the same time.

The prepolymer may be in the solid state or in the liquid state at normal temperature.

The neutralization degree of the prepolymer may be 50 mol% to 125 mol%, preferably 65 mol% to 105 mol%.

### Coating, adhesive or ink

The coating, adhesive or ink preferably further comprises an additive. The additive is preferably one or more of emulsifiers, light stabilizers, antioxidants, sterilants, fillers, antisettling agents, defoamers, wetting agents, flow conditioners, reactive diluents, plasticizers, neutralizers, catalysts, auxiliary solvents, thickeners, pigments, dyes, matting agents and tackifiers. The additives can be added during and/or after the preparation of the polyurethane-polyurea dispersion.

Selection and dosage of the additives are in principle known to those of ordinary skill in the art and can be easily determined.

The aqueous polyurethane-polyurea dispersion of the present invention may also be mixed with other water- or solvent-containing oligomers or polymers and used together, such as water- or solvent-containing polyester, polyurethane, polyurethane-polyacrylate, polyacrylate, polyether, polyester-polyacrylate, alkyd resin, addition polymer, polyamide/imide or polyepoxide. The compatibility of such mixtures should be tested in each case by means of simple preliminary test.

The aqueous polyurethane-polyurea dispersion of the present invention may also be mixed with other compounds containing functional groups such as carboxyl group, hydroxyl group and/or blocked isocyanate group, and used together.

The coating, adhesive or ink of the present invention is obtained by the methods known to those skilled in the art.

### Coated product, bonded product or printed product

The substrate is preferably one or more of wood, metal, glass, fiber, textile, artificial leather, real leather, paper, plastics, rubber, foam, ceramic and various polymer coating layers, and most preferably one or more of textile, plastic, ceramic, metal, real leather, artificial leather and various polymer coating layers.

The coating may be carried out by applying the coating, adhesive or ink onto the entire surface of the substrate or only onto one or more parts of the surface of the substrate.

The coating may be carried out by brushing, dipping, spraying, roller coating, knife coating, flow coating, casting, or printing.

### Description of the drawings

The present invention will be illustrated in more detail below with reference to the drawings, in which:
Fig. 1 is a schematic view for bonding of the sample strip.
Fig. 2 is a schematic view for the hydrolysis resistance test of the sample strip.
Fig. 3 is a schematic view of the adhesion test of the sample strip, in which Fig. 3a is a schematic view for coating, and Fig. 3b is a schematic view for folding and bonding of the substrate.

### Examples

Unless defined otherwise, all technical and scientific terms used herein have the same meaning as commonly understood by those skilled in the art. When the definition of a term in this specification conflicts with the meanings commonly understood by those skilled in the art, the definition described herein shall prevail.

Unless indicated otherwise, all numbers expressing quantities of ingredients, reaction conditions and the like used in the specification and claims are to be understood as being modified by the term "about". Accordingly, unless indicated to the contrary, the numerical parameters set forth herein are approximations that can vary depending upon the desired properties to be obtained.

The wording "and/or" used herein refers to one or all of the cited elements.

The wording "include" and "comprise" used herein cover the presence of the mentioned elements alone and the presence of other elements not mentioned in addition to the mentioned elements.

Unless otherwise indicated, the wordings "a", "an", and "the" used herein are intended to include "at least one" or "one or more". For example, the wording "a component" refers to one or more components, so that more than one component may be considered and may be adopted or used in the implementation of the described embodiments.

All percentages in the present invention are weight percentage, unless otherwise stated.

The analysis and measurement in the present invention are performed at 23±2°C, unless otherwise stated.

The content of solid constituents (solids content) of the aqueous polyurethane-polyurea dispersion is measured using an HS153 moisture analyzer from Mettler Toledo according to DIN-EN ISO 3251:2019, in which the heating temperature is 120°C, and the test end point is determined when the weight loss of the sample is less than 1 mg/140 seconds.

The average particle size of the aqueous polyurethane-polyurea dispersion is determined using laser correlation (laser particle sizer) with a ZEN 1600 tester from Malvern, UK, according to ISO 13321:1996 test method, in which 1 drop (about 0.05 g) of the sample is added to 50 ml of ultrapure water, and the diluted sample is tested at 23.0±0.1°C, material: polystyrene latex (RI: 1.590; absorption rate: 0.010), dispersant: water (temperature: 23.0°C; viscosity: 0.9308 cP; RI: 0.330), equilibration time: 60 seconds, using a disposable cuvette DTS0012, positioning method: automatic attenuation selection, best position found: yes, analysis model: universal (normal resolution), measurement angle: 173° backscatter (NIBS default), runs: 3, run duration: 10 seconds, measurements: 10.

The pH value of the aqueous polyurethane-polyurea dispersion is measured according to DIN ISO 976:2016-12 at 23°C with a PB-10 pH meter from Sartorius, Germany.

The viscosity of the aqueous polyurethane-polyurea dispersion is measured according to ISO 2555:2018 at 23°C using a DV-II+Pro. rotational viscometer from Brookfield, rotor type: s 62-64, speed: 30 RPM, test temperature: 23°C.

The isocyanate group (NCO) content is determined by volume according to DIN-EN ISO 11909:2007.

### Raw materials and agents

Polyester I: Semicrystalline form based on adipic acid and 1,4-butanediol, difunctional polyester polyol, number average molecular weight Mn of 2250 g/mol, hydroxyl number of 50 mgKOH/g, glass transition temperature of -61°C, melting temperature of 49°C, and enthalpy of fusion of 80 J/g. Polyester II: Semicrystalline form based on adipic acid, 1,6-hexanediol and neopentyl glycol (1,6-hexanediol to neopentyl glycol with molar ratio of 3:2), difunctional polyester polyol, number average molecular weight Mn of 1700 g/mol, hydroxyl number of 66 mgKOH/g, glass transition temperature of -63°C, melting temperature of 26°C, and enthalpy of fusion of 55 J/g.

Polyether I: Ymer N120, a difunctional polyether comprising side methoxypolyethylene oxide chains, with a number-average molecular weight of 1000 g/mol, commercially available from Perstorp Chemitec AB (SE).

Polyether II: Ymer N90, a difunctional polyether comprising side methoxypolyethylene oxide chains, with a number-average molecular weight of 1200g/mol, commercially available from Perstorp Chemitec AB (SE).

Polyether III: MPEG750, monofunctional polyethoxy ether, with a number-average molecular weight of 750 g/mol, commercially available from Shanghai Dongda Chemical Co., Ltd. Isocyanate I: Desmodur^{®} H , hexamethylene diisocyanate, commercially available from Covestro, Germany.

Isocyanate II: Desmodur^{®} I, isophorone diisocyanate, commercially available from Covestro, Germany.

Silane I: PC1110, (3-aminopropyl)trimethoxysilane, commercially available from Sisbo Silicones.

Silane II: PC1100, (3-aminopropyl)triethoxysilane, commercially available from Sisbo Silicones.

Silane III: PC1200, N-β-(aminoethyl)-γ-aminopropyltrimethoxysilane, commercially available from Sisbo Silicones.

Lucramul 1820 liquid: emulsifier, fatty alcohol polyethylene glycol/propylene glycol) ether, supplied as a 15% to 20% aqueous solution, commercially available from Levaco GmbH, Germany. Sodium N-(2-aminoethyl)-2-aminoethanesulfonate: Vestamin A 95, 49% in water, commercially available from Evonik, Germany.

Diethanolamine: analytical grade, commercially available from Sinopharm Chemical Reagent Co., Ltd.

Hydroxyethylethylenediamine: analytical grade, commercially available from Sinopharm Chemical Reagent Co., Ltd.

Isophorone diamine: analytical grade, commercially available from Sinopharm Chemical Reagent Co., Ltd.

Borchigel Gel L75N: thickener, as a transparent liquid, with a concentration of 25%, commercially available from Borchers Company.

### Preparation of aqueous polyurethane-polyurea dispersions

If the raw materials in the following examples are aqueous emulsions or aqueous solutions, the weight is that including water.

### Aqueous polyurethane-polyurea dispersion 1

510.82g of polyester I, 20.32g of polyester II and 6.27g of polyether I were dehydrated at 110°C and 80 mbar for 1 hour. Then, 2.3g of 1,4-butanediol were added and cooled while stirring. 64.16g of isocyanate I and 3.56g of isocyanate II were added at 60°C and stirred at 80 to 90°C, until an isocyanate content of 1.7% was reached. It was then dissolved in 930g of acetone and cooled to 50°C to obtain a reaction solution. A solution of 14.02g of sodium N-(2-aminoethyl)-2-aminoethanesulfonate, 1.03g of diethanolamine, 3.38g of hydroxyethylethylenediamine in 51.57g of water and a solution of 1.26g of silane I in 12.6g of acetone were added respectively to the acetone solution with the prepolymer dissolved therein while vigorously stirring. After stirring for 30 min, the mixture was dispersed by adding 560g of water. The acetone was separated by distillation for 5 hours. Upon the acetone content of less than 1.0% by weight, 40g of Lucramul 1820 liquid were added. Thus an aqueous polyurethane-polyurea dispersion was obtained with a content of solid constituents of 49.7% by weight and an average particle size in the dispersed phase of 135 nm, a pH value of 6.8 and a viscosity of 2567 mPa·s.

### Aqueous polyurethane-polyurea dispersion 2

542.81g of polyester I and 7.5g of polyether I were dehydrated at 110°C and 80 mbar for 1 hour. Then, 2.3g of 1,4-butanediol were added and cooled while stirring. 59.49g of isocyanate I and 3.77g of isocyanate II were added at 60°C and stirred at 80 to 90°C, until an isocyanate content of 1.3% was reached. It was then dissolved in 930g of acetone and cooled to 50°C to obtain a reaction solution. A solution of 11.47g of sodium N-(2-aminoethyl)-2-aminoethanesulfonate, 1.21g of isophorone diamine, 2.30g of hydroxyethylethylenediamine in 50g of water and a solution of 1.26g of silane II in 12.6g of acetone were added respectively to the acetone solution with the prepolymer dissolved therein while vigorously stirring. After stirring for 30 min, the mixture was dispersed by adding 570 g of water. The acetone was separated by distillation for 4.5 hours. Upon the acetone content of less than 1.0% by weight, 40g of Lucramul 1820 liquid were added. Thus, an aqueous polyurethane-polyurea dispersion was obtained with a content of solid constituents of 49.7% by weight and an average particle size in the dispersed phase of 166 nm, a pH value of 6.8 and a viscosity of 1692 mPas.

### Aqueous polyurethane-polyurea dispersion 3

531.56g of polyester I and 12.5g of polyether II were dehydrated at 110°C and 80 mbar for 1 hour. Then, 2.3 g of 1,4-butanediol were added and cooled while stirring. 69.17g of isocyanate I and 5.83g of isocyanate II were added at 60°C and stirred at 80 to 90°C, until an isocyanate content of 2.2% was reached. It was then dissolved in 930g of acetone and cooled to 50°C to obtain a reaction solution. A solution of 14.98g of sodium N-(2-aminoethyl)-2-aminoethanesulfonate, 5.23g of isophorone diamine, 3.1g of hydroxyethylethylenediamine in 50g of water and a solution of 1.26g of silane I in 12.6g of acetone were added respectively to the acetone solution with the prepolymer dissolved therein while vigorously stirring. After stirring for 30 min, the mixture was dispersed by adding 580g of water. The acetone was separated by distillation for 5 hours. Upon the acetone content of less than 1.0% by weight, 40g of Lucramul 1820 liquid were added. Thus, an aqueous polyurethane-polyurea dispersion was obtained with a content of solid constituents of 49.2% by weight and an average particle size in the dispersed phase of 210 nm, a pH value of 6.8 and a viscosity of 3012 mPa·s.

### Comparative aqueous polyurethane-polyurea dispersion 1

542.81g of polyester I and 7.5g of polyether I were dehydrated at 110°C and 80 mbar for 1 hour. Then, 2.3 g of 1,4-butanediol were added and cooled while stirring. 62.35g of isocyanate I were added at 60°C and stirred at 80 to 90°C, until an isocyanate content of 1.3% was reached. It was then dissolved in 930g of acetone and cooled to 50°C to obtain a reaction solution. A solution of 11.47g of sodium N-(2-aminoethyl)-2-aminoethanesulfonate, 1.21g of isophorone diamine, 2.30g of hydroxyethylethylenediamine in 50g of water and a solution of 1.26g of silane I in 12.6g of acetone were added respectively to the acetone solution with the prepolymer dissolved therein while vigorously stirring. After stirring for 30 min, the mixture was dispersed by adding 570 g of water. The acetone was separated by distillation for 4 hours. Upon the acetone content of less than 1.0% by weight, 40g of Lucramul 1820 liquid were added. Thus, an aqueous polyurethane-polyurea dispersion was obtained with a content of solid constituents of 49.8% by weight and an average particle size in the dispersed phase of 170 nm, a pH value of 7.0 and a viscosity of 1680 mPa·s.

### Comparative aqueous polyurethane-polyurea dispersion 2

542.81g of polyester I and 7.5g of polyether I were dehydrated at 110°C and 80 mbar for 1 hour. Then, 2.3 g of 1,4-butanediol were added and cooled while stirring. 53.82g of isocyanate I and 10.69g of isocyanate II were added at 60°C and stirred at 80 to 90°C, until an isocyanate content of 1.3% was reached. It was then dissolved in 930g of acetone and cooled to 50°C to obtain a reaction solution. A solution of 11.47g of sodium N-(2-aminoethyl)-2-aminoethanesulfonate, 1.21g of isophorone diamine, 2.30g of hydroxyethylethylenediamine in 50g of water and a solution of 1.26g of silane I in 12.6g of acetone were added respectively to the acetone solution with the prepolymer dissolved therein while vigorously stirring. After stirring for 30 min, the mixture was dispersed by adding 570 g of water. The acetone was separated by distillation for 5 hours. Upon the acetone content of less than 1.0% by weight, 40g of Lucramul 1820 liquid were added. Thus, an aqueous polyurethane-polyurea dispersion was obtained with a content of solid constituents of 50.2% by weight and an average particle size in the dispersed phase of 148 nm, a pH value of 6.6 and a viscosity of 2347 mPa s.

### Comparative aqueous polyurethane-polyurea dispersion 3

542.81g of polyester I and 7.5g of polyether I were dehydrated at 110°C and 80 mbar for 1 hour. Then, 2.3 g of 1,4-butanediol were added and cooled while stirring. 44.02g of isocyanate I and 24.21g of isocyanate II were added at 60°C and stirred at 80 to 90°C, until an isocyanate content of 1.3% was reached. It was then dissolved in 930g of acetone and cooled to 50°C to obtain a reaction solution. A solution of 11.47g of sodium N-(2-aminoethyl)-2-aminoethanesulfonate, 1.21g of isophorone diamine, 2.30g of hydroxyethylethylenediamine in 50g of water and a solution of 1.26g of silane I in 12.6g of acetone were added respectively to the acetone solution with the prepolymer dissolved therein while vigorously stirring. After stirring for 30 min, the mixture was dispersed by adding 570 g of water. The acetone was separated by distillation for 4 hour. Upon the acetone content of less than 1.0% by weight, 40g of Lucramul 1820 liquid were added. Thus, an aqueous polyurethane-polyurea dispersion was obtained with a content of solid constituents of 50.7% by weight and an average particle size in the dispersed phase of 204 nm, a pH value of 6.8 and a viscosity of 1472 mPas.

### Comparative aqueous polyurethane-polyurea dispersion 4

542.81g of polyester I and 7.5g of polyether I were dehydrated at 110°C and 80 mbar for 1 hour. Then, 2.3 g of 1,4-butanediol were added and cooled while stirring. 67.30g of isocyanate I and 8.1g of isocyanate II were added at 60°C and stirred at 80 to 90°C, until an isocyanate content of 2.2% was reached. It was then dissolved in 930g of acetone and cooled to 50°C to obtain a reaction solution. A solution of 14.98g of sodium N-(2-aminoethyl)-2-aminoethanesulfonate, 5.23g of isophorone diamine, 3.1g of hydroxyethylethylenediamine in 50g of water and a solution of 1.26g of silane I in 12.6g of acetone were added respectively to the acetone solution with the prepolymer dissolved therein while vigorously stirring. After stirring for 30 min, the mixture was dispersed by adding 580g of water. The acetone was separated by distillation for 5 hours. Upon the acetone content of less than 1.0% by weight, 40g of Lucramul 1820 liquid were added. Thus, an aqueous polyurethane-polyurea dispersion was obtained with a content of solid constituents of 50.0% by weight and an average particle size in the dispersed phase of 159 nm, a pH value of 6.7 and a viscosity of 2612 mPa s.

### Comparative aqueous polyurethane-polyurea dispersion 5

548.4 g of polyester I and 5 g of polyether I were dehydrated at 110°C and 80 mbar for 1 hour. Then, 2.3 g of 1,4-butanediol were added and cooled while stirring. 59.49g of isocyanate I and 3.77g of isocyanate II were added at 60°C and stirred at 80 to 90°C, until an isocyanate content of 1.3% was reached. It was then dissolved in 930g of acetone and cooled to 50°C to obtain a reaction solution. A solution of 11.47g of sodium N-(2-aminoethyl)-2-aminoethanesulfonate, 1.87g of hydroxyethylethylenediamine, 1.26g of diethanolamine in 50g of water and a solution of 1.26g of silane III in 12.6g of acetone were added respectively to the acetone solution with the prepolymer dissolved therein while vigorously stirring. After stirring for 30 min, the mixture was dispersed by adding 570 g of water. The acetone was separated by distillation for 4 hours. Upon the acetone content of less than 1.0% by weight, 40g of Lucramul 1820 liquid were added. Thus, an aqueous polyurethane-polyurea dispersion was obtained with a content of solid constituents of 49.7% by weight and an average particle size in the dispersed phase of 152 nm, a pH value of 6.9 and a viscosity of 1392 mPa·s.

### Comparative aqueous polyurethane-polyurea dispersion 6

542.8g of polyester I and 12.6g of polyether III were dehydrated at 110°C and 80 mbar for 1 hour. Then, 2.3 g of 1,4-butanediol were added and cooled while stirring. 59.49g of isocyanate I and 3.77g of isocyanate II were added at 60°C and stirred at 80 to 90°C, until an isocyanate content of 1.3% was reached. It was then dissolved in 930g of acetone and cooled to 50°C to obtain a reaction solution. A solution of 11.47g of sodium N-(2-aminoethyl)-2-aminoethanesulfonate, 2.81g of hydroxyethylethylenediamine in 50g of water and a solution of 1.26g of silane I in 12.6g of acetone were added respectively to the acetone solution with the prepolymer dissolved therein while vigorously stirring. After stirring for 30 min, the mixture was dispersed by adding 570 g of water. The acetone was separated by distillation for 6 hours. Upon the acetone content of less than 1.0% by weight, 40g of Lucramul 1820 liquid were added. Thus, an aqueous polyurethane-polyurea dispersion was obtained with a content of solid constituents of 50.5% by weight and an average particle size in the dispersed phase of 134 nm, a pH value of 6.7 and a viscosity of 5403 mPa·s.

### Method for preparing the adhesives of examples and comparative examples

According to the components shown in Table 1, 0.7g of BorchiL Gel L75N was added to 100g of the aqueous polyurethane-polyurea dispersion (which was left standing for 7 days at room temperature for ripening) with stirring at a speed of 600rpm, and then stirred at a high speed of 1200rpm for 10 minutes to 15 minutes for mixing thoroughly. The viscosity was adjusted to 5000mPa·s to 10000mPa·s for later use.

### Hydrolysis resistance test

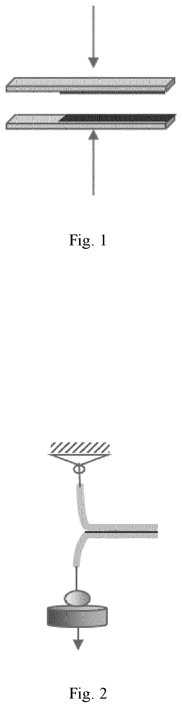

Substrate 1 (black rubber) and substrate 2 (black rubber) with a length of 120 mm and a width of 20 mm were mechanically polished and then coated with a rubber treatment agent (which was obtained by dissolving trichloroisocyanuric acid (B powder) in ethyl acetate). After drying, the adhesive of the present invention was applied using a brush onto the substrate 1 and the substrate 2 with a brushing area of 100mm*20mm. The adhesive was dried and thermally activated by heating the substrate 1 and substrate 2 at 60°C for 3 minutes. Then, the substrate 1 and substrate 2 were bonded for 10 seconds under a pressure of 4 bar to obtain a test sample strip as shown in Fig. 1. After the test sample strip was stored at room temperature (22±2°C, 50±5%RH) for 72 hours, a 1 kg weight was loaded on one end of the substrate, as shown in Fig. 2. It was placed in an oven with a temperature of 70°C and a humidity of 95%. The time taken for the complete detachment of the test sample strip was measured. It was regarded as qualified when the time taken for the complete detachment of the test sample strip was more than 8 hours.

### Adhesion test

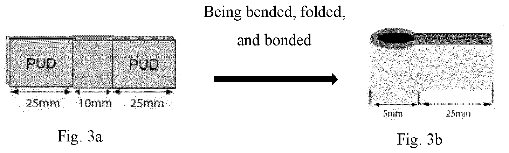

As shown in Fig. 3a, a black rubber with a length of 60 mm and a width of 20 mm was mechanically polished and then coated with a rubber treatment agent (which was obtained by dissolving trichloroisocyanuric acid (B powder) in ethyl acetate). After drying, the adhesive of the present invention was applied using a brush onto both ends of the substrate with an area of 25mm long and 20mm wide. The test substrate was heated at 60°C for 3 minutes for drying and thermal activation of the adhesive. Then, it was taken out, placed at room temperature (22±2°C, 50±5%RH) for 0 minute, 2 minutes, 4 minutes, 6 minutes, 8 minutes, and 10 minutes respectively, and then manually folded and bonded (shown in Fig. 3b). The speed and the distance of the detachment of the sample strip were recorded. The test results were scored with 1 to 5. A score of 5 was the best, and a score of 1 was the worst, and a score of 4 and above was regarded as qualified. If the two ends of the substrate bounced off within 5 seconds after being bonded (or could not be bonded at all), it had a score of 1. If the two ends of the substrate bounced off after more than 5 seconds but less than 120 seconds after being bonded, it had a score of 2. If the two ends of the substrate did not bounce off after not less than 120 seconds, and the separation distance was of 16mm to 25mm, it had a score of 3. If the two ends of the substrate did not bounce off after not less than 120 seconds, and the separation distance was not less than 6mm but less than 16mm, it had a score of 4. If the two ends of the substrate did not bounce off at all after not less than 120 seconds, or the separation distance was less than 6mm, it had a score of 5.

Table 1 shows evaluation results of the adhesion and the hydrolysis resistance of the adhesives of Examples 1-3 of the present invention and Comparative Examples 1-6.

**Table 1 Evaluation of the adhesives of Examples 1-3 and Comparative Examples 1-6**

| Composition of the adhesives | Ex. 1 | Ex. 2 | Ex. 3 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| BorchiL Gel L75N/g | 0.7 | 0.7 | 0.7 | 0.7 | 0.7 | 0.7 | 0.7 | 0.7 | 0.7 |
| Aqueous polyurethane-polyurea dispersion | 1 | 2 | 3 | Comp. 1 | Comp. 2 | Comp. 3 | Comp. 4 | Comp. 5 | Comp. 6 |

| Performance Test | | | | | | | | | |
|---|---|---|---|---|---|---|---|---|---|
| Adhesion | 4.0 | 5.0 | 4.0 | 3 | 3 | 3.0 | 3.0 | 5.0 | 4.0 |
| Hydrolysis resistance/h | >8 | >8 | >8 | >8 | >8 | <1 | >8 | <1 | <1 |

Remarks: The amount of all aqueous polyurethane-polyurea dispersions of the examples and comparative examples in Table 1 was 100 grams.

The aqueous polyurethane-polyurea dispersions of the examples of the present invention had good adhesion and hydrolysis resistance.

With comparison of Example 2 and Comparative Example 1, it can be seen that the adhesion of the aqueous polyurethane-polyurea dispersion was poor, when the system for preparing the aqueous polyurethane-polyurea dispersion comprised only one polyisocyanate, such as hexamethylene diisocyanate.

It can be seen from Comparative Examples 2-4 that the aqueous polyurethane-polyurea dispersions did not achieve both adhesion and hydrolysis resistance, when the weight ratio of the aliphatic polyisocyanate to the cycloaliphatic polyisocyanate comprised in the system for preparing the aqueous polyurethane-polyurea dispersions was lower than 10:1.

It can be seen from Comparative Example 5 that the hydrolysis resistance of the aqueous polyurethane-polyurea dispersion was poor, when the system for preparing the aqueous polyurethane-polyurea dispersion comprised a silane compound comprising two isocyanate-reactive groups, but did not comprise a silane compound comprising one isocyanate-reactive group.

It can be seen from Comparative Example 6 that the hydrolysis resistance of the aqueous polyurethane-polyurea dispersion was poor, when the system for preparing the aqueous polyurethane-polyurea dispersion comprised a polyether polyol with one isocyanate-reactive group, but did not comprise a polymer having a structure of formula I.

Those skilled in the art will readily understand that the present invention is not limited to the foregoing details, and can be implemented in other specific forms without departing from the spirit or main characteristics of the present invention. Therefore, the examples should be regarded as illustrative rather than restrictive from any point of view, so that the scope of the present invention is illustrated by the claims rather than the foregoing description. Therefore, any change, as long as it falls into the meaning and scope of equivalents of the claims, shall be regarded as belonging to the present invention.

## Claims

1. An aqueous polyurethane-polyurea dispersion comprising polyurethane-polyurea, wherein the polyurethane-polyurea is obtained by the reaction of a system comprising
a. at least one aliphatic polyisocyanate and at least one cycloaliphatic polyisocyanate with a weight ratio of the at least one aliphatic polyisocyanate to the at least one cycloaliphatic polyisocyanate in the range of 10:1 to 20:1, preferably one aliphatic polyisocyanate and one cycloaliphatic polyisocyanate with a weight ratio of the one aliphatic polyisocyanate to the one cycloaliphatic polyisocyanate in the range of 10:1 to 20:1 ;
b. a polymer having a structure of formula I: 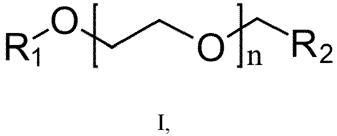 wherein n is 10 to 75, R₁ is an alkyl group containing 1 to 10 carbon atoms, and R₂ is a moiety containing at least two isocyanate-reactive groups;
c. a polyol other than component b), which has a hydroxyl functionality of 1.5 to 4;
d. a silane compound comprising one isocyanate-reactive group and at least two methoxy and/or ethoxy groups attached to the silicon atom;
e. a hydrophilic compound, different than polymer b), comprising 2 to 3 isocyanate-reactive groups; and
optionally
f. a compound comprising 1 to 3 amino and/or hydroxyl groups, preferably 1 to 3 amino groups.

2. The aqueous polyurethane-polyurea dispersion according to claim 1, **characterized in that** the component a) is a mixture of hexamethylene diisocyanate and isophorone diisocyanate.

3. The aqueous polyurethane-polyurea dispersion according to claim 2, **characterized in that** the weight ratio of hexamethylene diisocyanate to isophorone diisocyanate is of 10:1 to 20:1.

4. The aqueous polyurethane-polyurea dispersion according to any one of claims 1 to 3, **characterized in that** component a) the polyisocyanates have an isocyanate functionality of not less than 2, more preferably 2 to 4, and most preferably 2.

5. The aqueous polyurethane-polyurea dispersion according to any one of claims 1 to 4, **characterized in that** the at least two isocyanate-reactive groups are selected from at least two amino groups, at least two hydroxyl groups, or at least one amino group and at least one hydroxyl group.

6. The aqueous polyurethane-polyurea dispersion according to any one of claims 1 to 5, **characterized in that** the polymer having a structure of formula I is one or more of a polymer having a structure of formula II and a polymer having a structure of formula III, 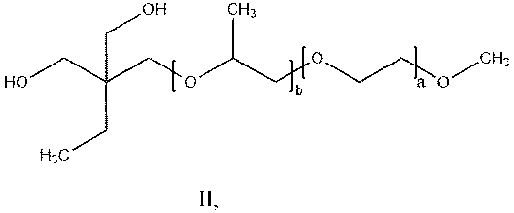 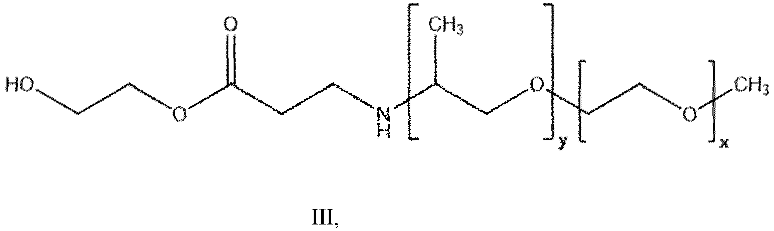 wherein a is 10 to 75, b is 0 to 50 in formula II; and x is 10 to 75, y is 1 to 50 in formula III.

7. The aqueous polyurethane-polyurea dispersion according to any one of claims 1 to 6, **characterized in that** component b) the polymer having a structure of formula I has a number-average molecular weight of 500 g/mol to 4000 g/mol, which is measured by gel chromatography, wherein tetrahydrofuran is used as the mobile phase, and the molecular weight is calculated based on a polystyrene as the standard, which is selected with a molecular weight of 200 or higher, and measured with a differential refraction detector (RI detector).

8. The aqueous polyurethane-polyurea dispersion according to any one of claims 1 to 7, **characterized in that** component d) the silane compound is one or more of bis(3-triethoxysilylpropyl)amine, bis(3-trimethoxysilylpropyl)amine, (3-aminopropyl)trimethoxysilane, (3-aminopropyl)triethoxysilane, 3-aminopropyl(diethoxy)methylsilane and 3-aminopropylmethyldimethoxysilane, most preferably one or more of (3-aminopropyl)trimethoxysilane, (3-aminopropyl)triethoxysilane, and 3-aminopropylmethyldimethoxysilane.

9. The aqueous polyurethane-polyurea dispersion according to any one of claims 1 to 8, **characterized in that** the polyol other than component b) is one or more of diols with a number-average molecular weight of 62 to 15000 and polyols with a number-average molecular weight of 62 to 15000, more preferably one or more of diols with a number-average molecular weight of 62 to 5000 and triols with a number-average molecular weight of 92 to 5000, most preferably one or more of polyester polyols containing 2 to 3 hydroxyl groups with a number-average molecular weight of 500 to 2500, polycarbonate polyols containing 2 to 3 hydroxyl groups with a number-average molecular weight of 400 to 2500, polyether polyols containing 2 to 3 hydroxyl groups with a number-average molecular weights of 200 to 2500, polylactone polyols containing 2 to 3 hydroxyl groups with a number-average molecular weights of 250 to 5000 and low-molecular-weight alcohols, wherein the number-average molecular weight is measured by gel chromatography, wherein tetrahydrofuran is used as the mobile phase, and the molecular weight is calculated based on a polystyrene as the standard, which is selected with a molecular weight of 200 or higher, and measured with a differential refraction detector (RI detector).

10. The aqueous polyurethane-polyurea dispersion according to any one of claims 1 to 9, **characterized in that** the polyol other than component b) has the enthalpy of fusion of not less than 15 J/g, most preferably 25 J/g to 100 J/g, obtained by DSC from the first heating curve from 20°C to 100°C according to DIN 65467, method A, wherein the loading volume is 10-20 mg, and the heating rate is 20 K/min.

11. The aqueous polyurethane-polyurea dispersion according to any one of claims 1 to 10, **characterized in that** component e) the hydrophilic compound, other than polymer b, comprising 2 to 3 isocyanate-reactive groups is one or more of N-(2-aminoethyl)-2-aminoethanesulfonates, dimethylolpropionates and N-(2-aminoethyl)-2-aminoethanecarboxylates.

12. The aqueous polyurethane-polyurea dispersion according to any one of claims 1 to 11, **characterized in that** component f) the compound comprising 1 to 3 amino and/or hydroxyl groups is one or more of aliphatic and/or cycloaliphatic primary and/or secondary monoamines or diamines or triamines or amino alcohols, most preferably one or more of isophorone diamine, N-(2-hydroxyethyl)ethylenediamine and diethanolamine.

13. The aqueous polyurethane-polyurea dispersion according to any one of claims 1 to 12, **characterized in that** component a) is in an amount of 9% by weight to 18% by weight, most preferably 10% by weight to 12% by weight, relative to the total weight of solid constituents of the aqueous polyurethane-polyurea dispersion.

14. The aqueous polyurethane-polyurea dispersion according to any one of claims 1 to 13, **characterized in that** component b) is in an amount of 0.9% by weight to 4% by weight, most preferably 1% by weight to 2% by weight, relative to the total weight of solid constituents of the aqueous polyurethane-polyurea dispersion.

15. The aqueous polyurethane-polyurea dispersion according to any one of claims 1 to 14, **characterized in that** component c) is in an amount of 5% by weight to 94% by weight, most preferably 70% by weight to 90% by weight, relative to the total weight of solid constituents of the aqueous polyurethane-polyurea dispersion.

16. The aqueous polyurethane-polyurea dispersion according to any one of claims 1 to 15, **characterized in that** component d) is in an amount of 0.12% by weight to 0.7% by weight, most preferably 0.18% by weight to 0.4% by weight, relative to the total weight of solid constituents of the aqueous polyurethane-polyurea dispersion.

17. The aqueous polyurethane-polyurea dispersion according to any one of claims 1 to 16, **characterized in that** component e) is in an amount of 0.2% by weight to 50% by weight, most preferably 1% by weight to 5% by weight, relative to the total weight of solid constituents of the aqueous polyurethane-polyurea dispersion.

18. The aqueous polyurethane-polyurea dispersion according to any one of claims 1 to 17, **characterized in that** component f) is in an amount of not more than 10% by weight, most preferably 0.5% by weight to 3% by weight, relative to the total weight of solid constituents of the aqueous polyurethane-polyurea dispersion.

19. The aqueous polyurethane-polyurea dispersion according to any one of claims 1 to 18, **characterized in that** the aqueous polyurethane-polyurea dispersion has at least one of the following characteristics:
the content of solid constituents is 15% by weight to 70% by weight, most preferably 30% by weight to 60% by weight, relative to the total weight of the aqueous polyurethane-polyurea dispersion, which is measured using the HS153 moisture analyzer from Mettler Toledo Company according to DIN-EN ISO 3251:2019, in which the heating temperature is 120°C, and the test end point is determined when the weight loss of the sample is less than 1 mg/140 seconds;
the pH value is of 4 to 11, most preferably 5 to 10, which is measured at 23°C with a PB-10 pH meter from Sartorius, Germany;
the average particle size is 20nm to 750nm, more preferably 50nm to 450nm, most preferably 100nm to 250nm, which is determined by laser correlation (laser particle sizer) with a ZEN 1600 tester from Malvern, UK, according to ISO 13321:1996 test method, in which 1 drop (about 0.05 g) of the sample is added to 50 ml of ultrapure water, and the diluted sample is tested at 23.0±0.1°C, material: polystyrene latex (RI: 1.590; absorption rate: 0.010), dispersant: water (temperature: 23.0°C; viscosity: 0.9308 cP; RI: 0.330), equilibration time: 60 seconds, using a disposable cuvette DTS0012, positioning method: automatic attenuation selection, best position found: yes, analysis model: universal (normal resolution), measurement angle: 173° backscatter (NIBS default), runs: 3, run duration: 10 seconds, measurements: 10; and
the viscosity is 1000 mPa·s to 3500 mPa·s, which is measured according to ISO 2555:2018 at 23°C using a DV-II+Pro. rotational viscometer from Brookfield, rotor type: s 62-64, speed: 30 RPM, test temperature: 23°C.

20. A method for preparing the aqueous polyurethane-polyurea dispersion comprising polyurethane-polyurea according to any one of claims 1 to 19, comprising the steps of:
i. reacting some or all of component a) at least one aliphatic polyisocyanate and at least one cycloaliphatic polyisocyanate with a weight ratio of the at least one aliphatic polyisocyanate to the at least one cycloaliphatic polyisocyanate in the range of 10: 1 to 20: 1, preferably one aliphatic polyisocyanate and one cycloaliphatic polyisocyanate with a weight ratio of the one aliphatic polyisocyanate to the one cycloaliphatic polyisocyanate in the range of 10: 1 to 20: 1, component b) a polymer having a structure of formula I and component c) a polyol other than component b) to obtain a prepolymer;
ii. reacting the prepolymer, component d) a silane compound, component e) a hydrophilic compound, different than polymer b, comprising 2 to 3 isocyanate-reactive groups, and optionally component f) a compound comprising 1 to 3 amino and /or hydroxyl groups, preferably 1 to 3 amino groups to obtain the polyurethane-polyurea; and
iii. introducing water before, during or after step ii to obtain the aqueous polyurethane-polyurea dispersion.

21. The method for preparing according to claim 20, further comprising a step iv. introducing an organic solvent, which is miscible with water but inert to isocyanate groups, during or after step i, and removing the organic solvent from the aqueous polyurethane-polyurea dispersion.

22. The method for preparing according to claim 21, **characterized in that** the organic solvent is partially or completely removed by distillation, wherein the distillation temperature is of 10°C to 100°C, most preferably 25°C to 60°C, and the distillation time is of 1 hour to 12 hours, most preferably 2 hours to 7 hours, and the rectification pressure is of 500 mbar to 50 mbar, most preferably 200 mbar to 60 mbar.

23. A coating, an adhesive or an ink comprising the aqueous polyurethane-polyurea dispersion comprising polyurethane-polyurea according to any one of claims 1 to 19.

24. The coating, adhesive or ink according to claim 23, further comprising an additive selected from one or more of emulsifiers, light stabilizers, antioxidants, sterilants, fillers, antisettling agents, defoamers, wetting agents, flow conditioners, reactive diluents, plasticizers, neutralizers, catalysts, auxiliary solvents, thickeners, pigments, dyes, matting agents and tackifiers.

25. Use of the aqueous polyurethane-polyurea dispersion comprising polyurethane-polyurea according to any one of claims 1 to 19 for preparing coated products, bonded products or printed products.

26. An object or article comprising a substrate prepared, coated, bonded, sealed, or printed with the aqueous polyurethane-polyurea dispersion comprising polyurethane-polyurea according to any one of claims 1 to 19.
